# EUROPEAN PATENT SPECIFICATION

(11) **EP 1 403 617 B1**
(45) Date of publication and mention of the grant of the patent: **22.02.2012**
(21) Application number: 03021742.6
(22) Date of filing: 25.09.2003
(51) Int. Cl.: G01C 21/36, G06F 3/033, B60K 35/00

(54) **Electronic equipment and navigation apparatus**
Elektronisches Gerät und Navigationssystem
Appareil électronique et système de navigation

(30) Priority: 25.09.2002 JP 2002279545
(43) Date of publication of application: 31.03.2004
(73) Proprietor: Clarion Co., Ltd., Saitama-shi, Saitama 330-0081 (JP)
(72) Inventor: Yoshihara, Keiichiro, Saitama, 330-0081 (JP)
(74) Representative: Grünecker, Kinkeldey, Stockmair & Schwanhäusser

(56) References cited:
- EP-A- 0 810 803
- EP-A- 0 871 010
- EP-A- 0 881 563
- US-A1- 2002 112 237

## Description

### BACKGROUND OF The INVENTION

### Field of the Invention

The present invention relates to an electronic equipment including a display part. The present invention also relates to a navigation apparatus for setting an arbitrary position on a displayed map image as a point relating to a navigation.

### Description of the Related Art

In a general vehicle-mounted acoustic apparatus of a conventional electronic equipment that includes a display part, symbols showing objects to be controlled such as an icon showing a radio, an icon showing a CD player and an icon showing a title of music of a CD are displayed on a screen of the display part. In the vehicle-mounted acoustic apparatus, symbols showing details of the control such as an icon showing repeat reproduction and an icon showing an adjustment mode are also displayed on the screen of the display part. In order to select an arbitrary icon on the screen, a cursor switch for moving a cursor displayed on the screen and an execution switch for selecting a control object by an icon of a cursor position and for selecting details of the control by an icon of a cursor position are also provided in the vehicle-mounted acoustic apparatus. In an operating procedure of such a vehicle-mounted acoustic apparatus, for example, when a user intends to repeatedly reproduce music of a CD, an icon of a CD to be reproduced is selected by a depression operation of the cursor switch and the CD corresponding to the icon is selected by a depression operation of the execution switch. Next, an icon of repeat reproduction is selected by a depression operation of the cursor switch and the repeat reproduction is selected by a depression operation of the execution switch.

Incidentally, in the conventional electronic equipment including the display part without being limited to such vehicle-mounted acoustic apparatus described above, it is configured so as to perform desired control by a switch operation with respect to a symbol displayed on the screen of the display part. There exist an enormous number of references describing such a configuration and is quite difficult to disclose a specific reference as the most proper prior art reference. Therefore, the operating procedure of the vehicle-mounted acoustic apparatus conventionally well known among those skilled in the art as described above is taken as one example of a conventional art relating to the present invention.

Also, an operating procedure of a conventional navigation apparatus capable of setting an arbitrary position on a displayed map image as a point relating to navigation is approximately similar to that of the case of the conventional vehicle-mounted acoustic apparatus. For example, when an arbitrary point is registered as a point relating to navigation, a cursor is first displayed on a displayed map image by a touch operation of a registration switch for setting point registration. Next, the cursor is moved in an arbitrary position of the map by a depression operation of the cursor switch and an actual point corresponding to the cursor position at that time is set as a registration point by a depression operation of the execution switch.

Incidentally, a configuration of such a conventional navigation apparatus is quite generally configured and there exist an enormous number of references describing such a configuration and it is quite difficult to disclose a specific reference as the most proper prior art reference. Therefore, the operating procedure of the general navigation apparatus well known already among those skilled in the art as described above is taken as one example of the conventional art relating to the present invention.

In the conventional electronic equipment described above, there was a problem that in order to execute desired details of the control with respect to a desired control object, it is necessary to perform troublesome switch operations many times and an excessive burden on a user is forced. As a result, for example, in the vehicle-mounted acoustic apparatus used as one example of the conventional electronic equipment, there was a problem that troublesome switch operations must be performed many times with respect to a user particularly in driving when a sound source device such as a radio or a CD player device is selected or a desired CD is selected to perform repeat reproduction.

Also, in the conventional navigation apparatus described above, in a manner similar to the case of the conventional electronic equipment, there was a problem that, for example, in order to set a desired position on a displayed map image as a registration point, it is necessary to perform troublesome switch operations many times and an excessive burden on a user is forced.

US 2002/0112237 A1 relates to a navigation interface system that organizes information sources into a navigation map. Items on the navigation map represent different categories. The map items may be selected so that the navigation display performs further processes related to the map item. The map can be zoomed in or out and panned so as to cause movement of the items on the map.

EP 0 881 563 A relates to a device adapted to display a digital map, wherein a pointer can be shifted within the displayed map and wherein the amount by which the pointer is shifted corresponds to the scrolling speed of a displayed portion of the map within the screen.

### SUMMARY OF The INVENTION

It is therefore an object of the invention is to provide an electronic equipment capable of easily executing desired details of the control with respect to a desired control object without performing a troublesome switch operation.

Another object of the invention is to provide a navigation apparatus capable of easily setting a desired position on a displayed map image as a point relating to navigation without performing a troublesome switch operation.

This object is solved by the subject matter of the independent claim. Preferred embodiments are subject matter of the dependent claims.

According to an illustrative example, there is provided an electronic equipment including: a display unit configured to display a first symbol indicating a control object and a second symbol indicating details of a control in a predetermined display position, respectively; a selection unit configured to select at least one of the first and the second symbols displayed on the display unit in response to an instruction operation; a movement unit configured to move the display position of the selected symbol in response to a movement operation; and a control unit configured to execute the details of the control corresponding to the second symbol with respect to the control object corresponding to the first symbol in response to an execution operation.

According to another illustrative example, there is provided a navigation apparatus including: a display unit configured to display a map image and a symbol relating to navigation in a predetermined display position, respectively; a selection unit configured to select the symbol displayed on the display unit in response to an instruction operation;
a movement unit configured to move the display position of the selected symbol in response to a movement operation; and a control unit configured to configure a point corresponding to a position on the map image as a point relating to navigation, the position in which the display position of the selected symbol is moved to in response to a configuration operation.

### BRIEF DESCRIPTION OF The DRAWINGS

The above objects and advantages of the present invention will become more apparent by describing in detail preferred exemplary embodiments thereof with reference to the accompanying drawings, wherein:
Fig. 1 is an outline view of a vehicle-mounted acoustic apparatus in first to fourth embodiments of an electronic equipment according to the invention;
Fig. 2 is a block diagram showing a system configuration of the vehicle-mounted acoustic apparatus in the first to fourth embodiments according to the invention;
Figs. 3a through 3e are diagrams showing an operating procedure of controlling a CD player device of the vehicle-mounted acoustic apparatus in the first embodiment according to the invention;
Fig. 4 is a flowchart of control processing of the CD player device performed by a main CPU in the first embodiment according to the invention;
Figs. 5a through 5e are diagrams showing an operating procedure of controlling a CD changer device of the vehicle-mounted acoustic apparatus in the second embodiment according to the invention;
Figs. 6a through 6e are diagrams showing an operating procedure of controlling a sound source device of the vehicle-mounted acoustic apparatus in the third embodiment according to the invention;
Figs. 7a through 7e are diagrams showing an operating procedure of changing a title of music of the vehicle-mounted acoustic apparatus in the fourth embodiment according to the invention;
Fig. 8 is an outline view of a display system apparatus in a fifth embodiment according to the invention;
Fig. 9 is a block diagram showing a system configuration of the display system apparatus in the fifth embodiment according to the invention;
Fig. 10 is a block diagram showing a system configuration of a navigation apparatus in a sixth embodiment according to the invention; and
Figs. 11a through 11e are diagrams showing an operating procedure of point registration of the navigation apparatus in the sixth embodiment according to the invention.

### DETAILED DESCRIPTION OF The PREFERRED EMBODIMENTS

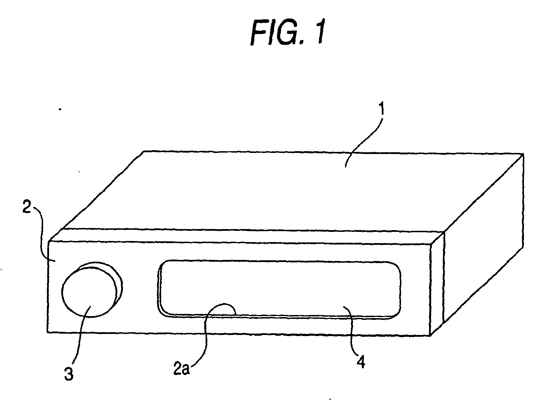

Hereinbelow, first to fourth embodiments of an electronic equipment according to the invention will be described with reference to the drawings by taking a vehicle-mounted acoustic apparatus as an example of the electronic equipment. Fig. 1 is an outline view showing a structure of the vehicle-mounted acoustic apparatus in the first to fourth embodiments.

The vehicle-mounted acoustic apparatus shown in Fig. 1 is provided with an operating panel 2 on the front of a cabinet 1. A volume knob 3 for volume control is provided in a position near to the end of the operating panel 2. Also, an opening 2a is formed in the approximately center of the operating panel 2 and a display touch sensor 4 is exposed to an opening 2a of the operating panel 2. Specifically, the vehicle-mounted acoustic apparatus is configured so that a touch sensor having a switch function of shifting to an on state in response to a touch (also called "depression" which applies to the other embodiments) is placed on a display surface of a display having a display function.

A display (corresponding to display unit) is constructed of an LCD (liquid crystal display device). Also, a touch sensor is constructed of a transparent conductive film using ITO (Indium Tin Oxide: a compound of indium, tin and oxygen) as material, and is formed on a display surface of the LCD by an electron beam evaporation method or a sputtering method.

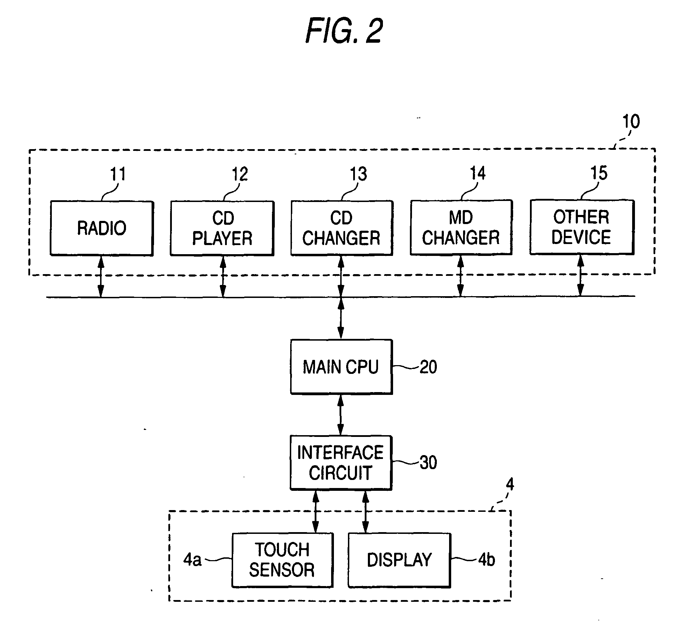

Fig. 2 is a block diagram showing a system configuration of the vehicle-mounted acoustic apparatus of Fig. 1. A sound source device 10 for providing a sound source such as a sound or a musical sound comprises a radio device 11, a CD player device 12, a CD changer device 13, an MD changer device 14 and other devices 15. A main CPU 20 (corresponding to selection unit, movement unit and control unit) is connected to each of these devices through a system bus, and performs control with respect to each the device in response to a command of a user inputted from the display touch sensor 4. The main CPU 20 is connected to the display touch sensor 4 through an interface circuit 30, and captures a command from a touch sensor 4a in response to an operation of the user, and outputs image data to be displayed to a display 4b.

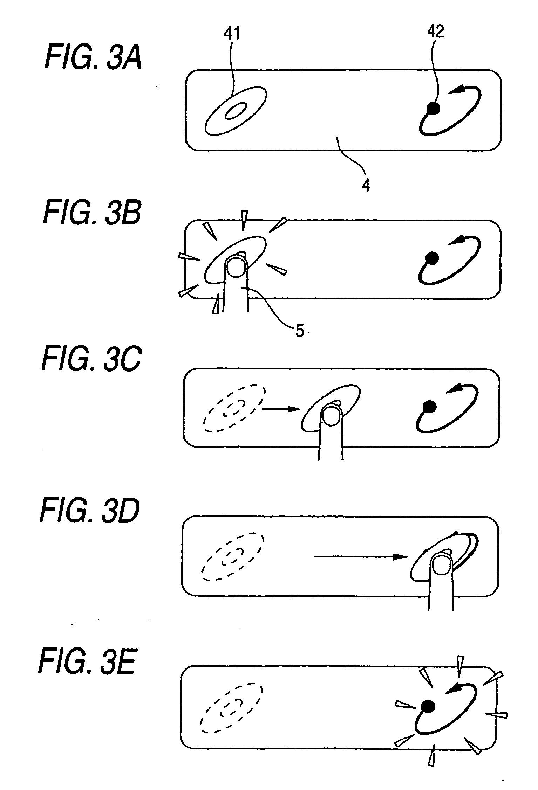

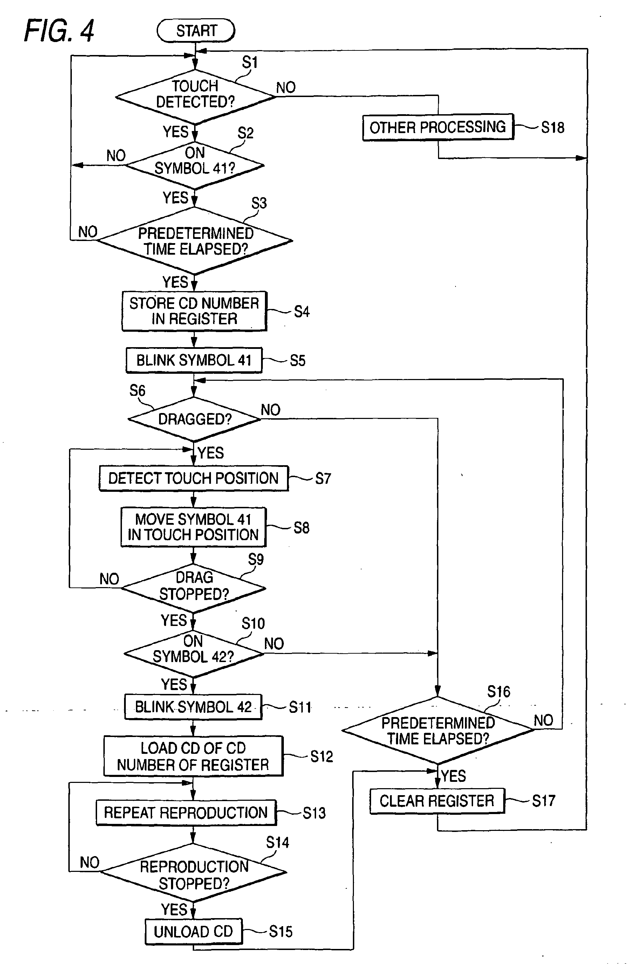

Figs. 3a through 3e are diagrams showing an operating procedure of the case of controlling the CD player device 12 in a first embodiment. Fig. 4 is a flowchart of control processing by the main CPU 20. An operation of the first embodiment will be described below with reference to Figs. 3a through 3e and Fig. 4. Incidentally, in the flowchart of Fig. 4, only the main points related to the invention will be described and description of other general processing will be omitted.

In Fig. 3a, a symbol 41 (corresponding to a first symbol) and a symbol 42 (corresponding to a second symbol) are displayed on a screen of the display touch sensor 4. The symbol 41 is an icon showing a particular CD which is a control obj ect, and the symbol 42 is an icon showing repeat reproduction which is details of the control. Incidentally, the details of the control include random reproduction or scan reproduction other than the repeat reproduction, and are displayed by unique icons, respectively.

As shown in Fig. 3b, when a user touches an icon of the symbol 41 with a finger 5 for a predetermined time (for example, two or three seconds) or longer as a predetermined instruction operation, the main CPU 20 detects the instruction operation through the touch sensor 4a and the interface circuit 30 (step S1 to step S3), and selects the icon of the symbol 41 and the number of the particular CD corresponding to the icon (step S4). In the case, the main CPU 20 blinks the icon of the symbol 41 and notifies the user that the corresponding particular CD is selected (step S5).

Then, as shown in Fig. 3c, when the user drags (moves) in a direction of an arrow of the drawing with the icon of the symbol 41 touched with the finger 5 as a predetermined movement operation, the main CPU 20 moves a display position of the icon of the symbol 41 in response to the movement operation (step S6 to step S8). In the case, an icon whose contrast is weakened (the degree of display is decreased) may be displayed in the original display position of the icon of the symbol 41.

As shown in Fig. 3d, when the user moves the finger 5 in a touch state to an icon of the symbol 42 and stops the drag, a display position of the icon of the symbol 41 overlaps with a display position of the icon of the symbol 42. When the main CPU 20 detects a stop of the drag (step S9) and further detects that the stop position is located on the symbol 42 (step S10), as shown in Fig. 3e, the main CPU 20 blinks the icon of the symbol 42 and notifies the user that the details of the control of the icon of the symbol 42 are executed (step S11). Then, the main CPU 20 loads the selected particular CD (step S12) and executes repeat reproduction of the CD (step S13).

In the embodiment, the CPU 20 executes the details of the control (repeat reproduction) when the CPU 20 detects that the display position of the first symbol (icon of the symbol 41) overlaps the display position of the second symbol (icon of the symbol 42) at a time the movement operation has stopped (i.e. when the CPU 20 detects a stop of the drag operation). However, the CPU-20 may configured to execute the details of the control when the CPU 20 detects a drop operation in which the finger has moved away from the touch sensor 4a in a condition where the display position of the first symbol overlaps the display position of the second symbol.

Figs . 5a through 5e are diagrams showing an operating procedure of the case of controlling the CD changer device 13 in a second embodiment. Incidentally, control processing performed by the main CPU 20 in the second embodiment is nearly equal to control processing of the first embodiment shown in Fig. 4, so that a flowchart is omitted.

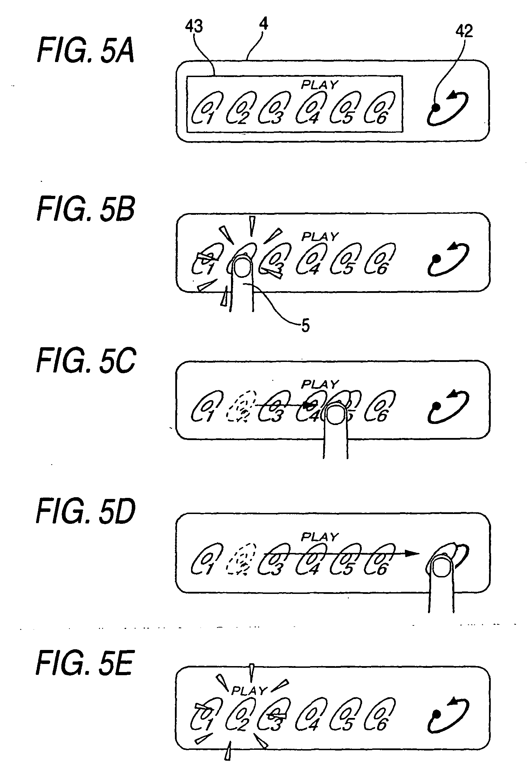

As shown in Fig. 5a, a symbol 43 (corresponding to a first symbol) and a symbol 42 (corresponding to a second symbol) are displayed on a screen of the display touch sensor 4. The symbol 43 is plural icons showing plural CDs (six in the case) which are control objects. Also, the symbol 42 is an icon showing repeat reproduction which is details of the control in a manner similar to the first embodiment.

As shown in Fig. 5b, when a user touches one icon (icon of the second CD in the case) of the symbol 43 with a finger 5 for a predetermined time (for example, two or three seconds) or longer as a predetermined instruction operation, the main CPU 20 detects the instruction operation through the touch sensor 4a and the interface circuit 30, and selects the icon of the symbol 43 and the number of the particular CD corresponding to the icon. In the case, the main CPU 20 blinks the corresponding icon of the symbol 43 and notifies the user that the corresponding particular CD is selected.

Then, as shown in Fig. 5c, when the user drags (moves) in a direction of an arrow of the drawing with the selected icon touched with the finger 5 as a predetermined movement operation, the main CPU 20 moves a display position of the icon in response to the movement operation. In the case, an icon whose contrast is weakened may be displayed in the original display position of the icon.

As shown in Fig. 5d, when the user moves the finger 5 in a touch state to an icon of the symbol 42 and stops the drag, a display position of the selected icon of the symbol 43 overlaps with a display position of the icon of the symbol 42. When the main CPU 20 detects a stop of the drag and further detects that the stop position is located on the symbol 42, as shown in Fig. 5e, the main CPU 20 blinks the selected icon of the symbol 43 and selects a CD of the icon and notifies the user that the details of the control of the symbol 42 are executed. Then, the main CPU 20 loads the selected particular CD and executes repeat reproduction.

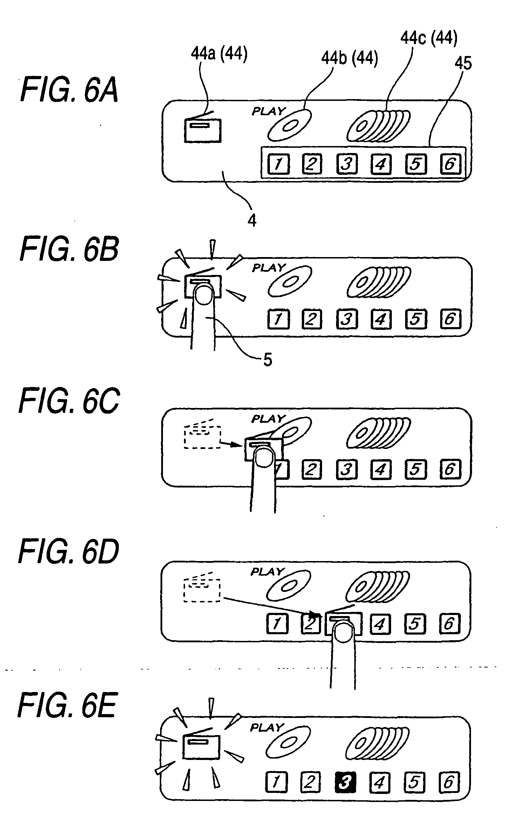

Figs. 6a through 6e are diagrams showing an operating procedure of the case of controlling the radio 11, the CD player device 12 and the CD changer device 13 in a third embodiment. Incidentally, control processing performed by the main CPU 20 in the third embodiment is nearly equal to control processing of the first embodiment shown in Fig. 4, so that a flowchart is omitted.

As shown in Fig. 6a, a symbol 44 (corresponding to a first symbol) and a symbol 45 (corresponding to a second symbol) are displayed on a screen of the display touch sensor 4. The symbol 44 is plural icons 44a, 44b, 44c showing plural devices (three in the case) which are control objects. Also, the symbol 45 is an icon showing channels which are details of the control.

The details of the control of channels have meaning different depending on the control objects. When the control object is the radio 11, the number of the channel is used for selection of a broadcast station. When the control object is the CD player device 12, the number of the channel is used for selection of music. When the control object is the CD changer device 13 (also as in the MD changer device 14), the number of the channel is used for selection of a disk (CD or MD).

As shown in Fig. 6b, when a user touches one icon (icon 44a of the radio in the case) of the symbol 44 with a finger 5 for a predetermined time (for example, two or three seconds) or longer as a predetermined instruction operation, the main CPU 20 detects the instruction operation through the touch sensor 4a and the interface circuit 30, and selects the icon 44a and the radio 11 corresponding to the icon 44a. In the case, the main CPU 20 blinks the corresponding icon 44a of the symbol 44 and notifies the user that the device corresponding to the touch of the finger is selected.

Then, as shown in Fig. 6c, when the user drags (moves) in a direction of an arrow of the drawing with the selected icon touched with the finger 5 as a predetermined movement operation, the main CPU 20 moves a display position of the icon in response to the movement operation. In the case, an icon whose contrast is weakened may be displayed in the original display position of the icon.

As shown in Fig. 6d, when the user moves the finger 5 in a touch state to an icon of the symbol 45 and stops the drag, a display position of the selected icon 44a overlaps with a display position of the icon of the symbol 45. When the main CPU 20 detects a stop of the drag and further detects that the stop position is located on the channel number of the symbol 45, as shown in Fig. 6e, the main CPU 20 blinks the selected icon 44a of the symbol 44 and also reverses display of the selected channel number of the symbol 45 and notifies the user that broadcast of channel 3 is selected. That is, the user is notified that the selected details of the control are executed with respect to the selected control object. Then, the radio 11 is started and processing for receiving the broadcast of channel 3 is performed.

Incidentally, in the third embodiment, as a receiver of broadcast, the radio 11 is taken as an example, and a similar operating procedure is used also in the case of a receiver for receiving television broadcast.

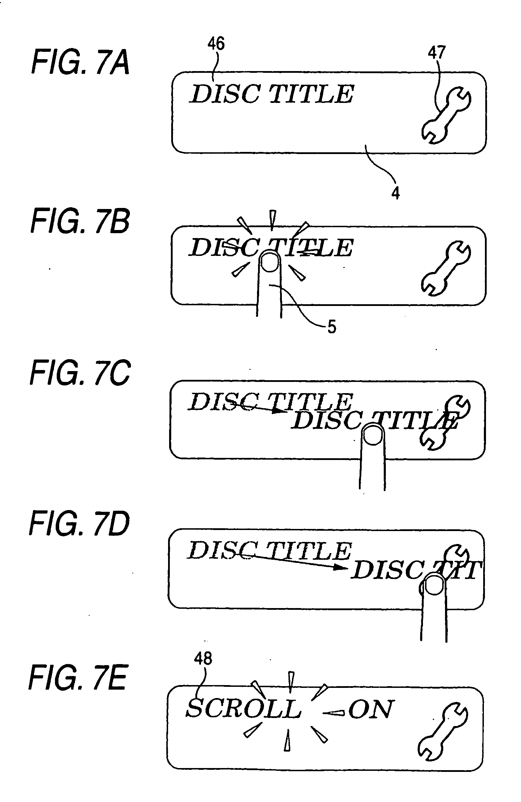

Figs. 7a through 7e are diagrams showing an operating procedure of the case of changing a title of music of a disk such as CD or MD in a fourth embodiment. Incidentally, control processing in the fourth embodiment is nearly equal to control processing of the first embodiment shown in Fig. 4, so that a flowchart is omitted.

As shown in Fig. 7a, a symbol 46 (corresponding to a first symbol) and a symbol 47 (corresponding to a second symbol) are displayed on a screen of the display touch sensor 4. The symbol 46 is an icon showing a title which is a control object, and the symbol 47 is an icon showing an adjustment mode which is details of the control.

As shown in Fig. 7b, when a user touches the symbol 46 with a finger 5 for a predetermined time (for example, two or three seconds) or longer as a predetermined instruction operation, the main CPU 20 detects the instruction operation through the touch sensor 4a and the interface circuit 30, and selects the symbol 46 and an address of memory in which the title is stored. In the case, the main CPU 20 blinks the title which is the icon of the symbol 46 and notifies the user that the title is selected as an adjustment object.

Then, as shown in Fig. 7c, when the user drags (moves) in a direction of an arrow of the drawing with the selected icon touched with the finger 5 as a predetermined movement operation, the main CPU 20 moves a display position of the icon in response to the movement operation. In the case, an icon whose contrast is weakened may be displayed in the original display position of the icon.

As shown in Fig. 7d, when the user moves the finger 5 in a touch state to an icon of the symbol 47 and stops the drag, a display position of the symbol 46 overlaps with a display position of the icon of the symbol 47. When the main CPU 20 detects a stop of the drag and further detects that the stop position is located on the symbol 47, as shown in Fig. 7e, the main CPU 20 blinks and displays a symbol 48 showing scroll processing for changing the title in the original display position of the symbol 46. That is, notification that the selected details of the control are executed with respect to the selected control object is provided.

According to the first to fourth embodiments as described above, the touch sensor 4a of a display position corresponding to at least one of an arbitrary first symbol or an arbitrary second symbol displayed is selected in response to a touch operation of the finger and a display position of the selected symbol is moved in response to a drag operation on the touch sensor 4a with the display position touched and the details of the control corresponding to the second symbol are executed with respect to the control object corresponding to the first symbol in the case of detecting that a display position of the first symbol overlaps with a display position of the second symbol by a stop of the drag operation, so that desired details of the control can be executed easily with respect to a desired control object by only the touch operation of the touch sensor 4a without performing a troublesome switch operation.

Also, according to the first to fourth embodiments as described above, when the touch sensor is touched for a predetermined time or longer in a display position of an arbitrary symbol, the symbol is selected, so that a malfunction due to an instantaneous touch can be prevented.

Incidentally, in the first to fourth embodiments as described above, the electronic equipment of the invention has been described by taking the vehicle-mounted acoustic apparatus as an example, but the electronic equipment of the invention is not limited to the vehicle-mounted acoustic apparatus of the embodiments. That is, as long as the electronic equipment is configured so as to have display unit for displaying at least one first symbol showing a control object and at least one second symbol showing details of the control, selection unit for selecting at least one of an arbitrary first symbol or an arbitrary second symbol displayed on the display unit in response to a predetermined instruction operation, movement unit for moving a display position of the symbol selected by the selection unit in response to a predetermined movement operation, and control unit for executing the details of the control corresponding to the second symbol with respect to the control object corresponding to the first symbol in the case of detecting that a display position of the first symbol overlaps with a display position of the second symbol by a stop of the movement operation, the invention can be applied to any electronic equipment other than the vehicle-mounted acoustic apparatus.

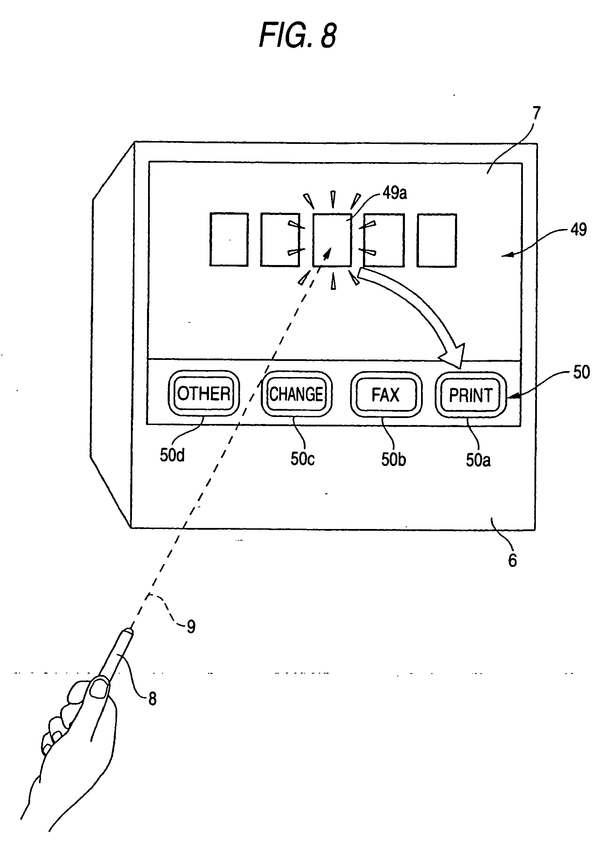

Next, a fifth embodiment of electronic equipment of the invention will be described based on the drawings by taking a display system apparatus having a large display screen used in a meeting or a lecture as an example. Fig. 8 is an outline view showing the display system apparatus in the fifth embodiment. A display system apparatus 6 comprises a display sensor 7 which is a large display screen. This display sensor 7 is constructed of a display having a function of displaying an image and a light sensor having a function of detecting irradiation of a light beam. As the light sensor, for example, manufacture is performed by forming a semiconductor such as a photodiode or a phototransistor having a light detection function in a transparent conductive film made of ITO.

Now, a symbol 49 (corresponding to a first symbol) acting as a control object and a symbol 50 (corresponding to a second symbol) acting as details of the control are displayed on the display sensor 7. In the case, an image of a document for meeting is the symbol 49, and a symbol 50a of print for processing the document, a symbol 50b of fax, a symbol 50c of change and a symbol 50d of other processing are displayed.

A laser instruction device 8 is a device for emitting a light beam 9 of a red laser. A user such as a presenter of a meeting can irradiate the display sensor 7 with the light beam 9 emitted by an operation of the laser instruction device 8 and select an arbitrary position of a display screen. Further, by moving the light beam 9 on the screen in a state of irradiating an arbitrary symbol, a drag operation can be performed in a manner similar to the case on the touch sensor in the first to fourth embodiments.

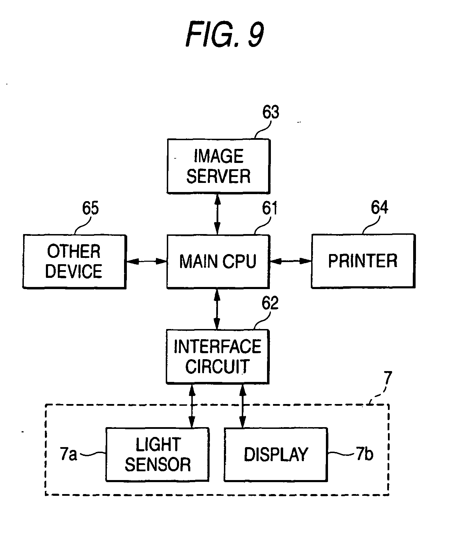

Fig. 9 is a block diagram showing a system configuration of the display system apparatus 6 of Fig. 8. A main CPU 61 is connected to the display sensor 7 through an interface circuit 62 and controls a light sensor 7a and a display 7b. Also, the main CPU 61 is connected to an image server 63, a printer 64 and other devices 65 such as fax, and sends and receives data and commands to and from these. A document and other image data corresponding to the symbol 49 displayed on the display 7b as a control object are stored in the image server 63.

In the fifth embodiment, an operation of control processing of the main CPU 61 will be described, but control processing in the case is nearly equal to control processing of the first embodiment shown in Fig. 4 except that processing for detecting irradiation of the light beam 9 is performed rather than processing for detecting a touch of a finger, so that a flowchart for the fifth embodiment is omitted.

In Fig. 8, when a user irradiates one image 49a of the symbol 49 with the light beam 9 from the laser instruction device 8 for a predetermined time (for example, two or three seconds) or longer as a predetermined instruction operation, the main CPU 61 detects the instruction operation through the light sensor 7a and the interface circuit 62, and selects the image 49a of the symbol 49. In the case, the main CPU 61 blinks the image 49a of the symbol 49 and notifies the user that the image is selected.

When the user drags (moves) in a direction of an arrow of the drawing with the selected image 49a of the symbol 49 irradiated with the light beam 9 as a predetermined movement operation, the main CPU 61 moves a display position of the image 49a in response to the movement operation. In the case, an icon whose contrast is weakened may be displayed in the original display position of the image 49a.

When the user moves the light beam 9 to an image 50a of a print mark of the symbol 50 in a state of irradiation and stops the drag, a display position of the image 49a of the symbol 49 overlaps with a display position of the image 50a of the print mark of the symbol 50. When the main CPU 61 detects a stop of the drag and further detects that the stop position is located on the image 50a of the print mark of the symbol 50, the main CPU 61 reads image data of a document corresponding to the image 49a of the symbol 49 out of the image server 63 and outputs the image data to the printer 64 to provide printout. This also applies to images other than the image 50a of the print mark. For example, when the image 49a of the symbol 49 is dragged on an image 50b of a fax mark, image data of a document corresponding to the image 49a of the symbol 49 is read out of the image server 63 and is sent by fax. That is, the selected details of the control are executed with respect to the selected control object.

According to the fifth embodiment as described above, since the irradiation position is detected in response to a particular light beam with which the display screen 7 on which the symbol is displayed is irradiated, an instruction operation by irradiation of the light beam 9 and a movement operation by drag of the light beam 9 can be performed using the laser instruction device 8 for emitting the particular light beam 9 of a red laser, so that desired details of the control can be executed easily with respect to a desired control object by an untouched remote control operation from a position distant from the display screen without performing a troublesome switch operation.

According to the fifth embodiment as described above, when the light sensor 7a is irradiated with the light beam 9 for a predetermined time or longer in a display position of an arbitrary symbol, the symbol irradiated with the light beam is selected, so that a malfunction due to instantaneous irradiation of the light beam can be prevented.

A navigation apparatus in a sixth embodiment of the invention will be described based on the drawings. An outward appearance of the navigation apparatus is nearly equal to an outward appearance of the vehicle-mounted acoustic apparatus of the first embodiment shown in Fig. 1. That is, an operating panel is provided on the front of a cabinet, and an opening is formed in the approximately center of the operating panel and a display touch sensor is exposed to the opening. Specifically, the navigation apparatus is configured so that a touch sensor having a switch function of shifting to an on state in response to a touch is placed on a display surface of a display having a display function.

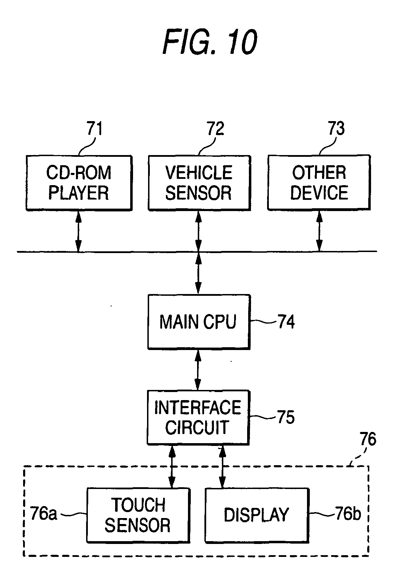

Fig. 10 is a block diagram showing a system configuration of the navigation apparatus in the sixth embodiment. As shown in the drawing, a CD-ROM player 71 for reproducing CD-ROM in which data of a map image is stored, a vehicle sensor 72 for detecting a position of a vehicle, a direction of the vehicle, a vehicle speed, etc., and other devices 73 such as a receiver for receiving traffic information are connected to a system bus of a main CPU 74 (corresponding to selection unit, movement unit and setting means). Also, a display touch sensor 76 (corresponding to display unit) is connected to the main CPU 74 through an interface circuit 75, and a touch sensor 76a and a display 76b are controlled.

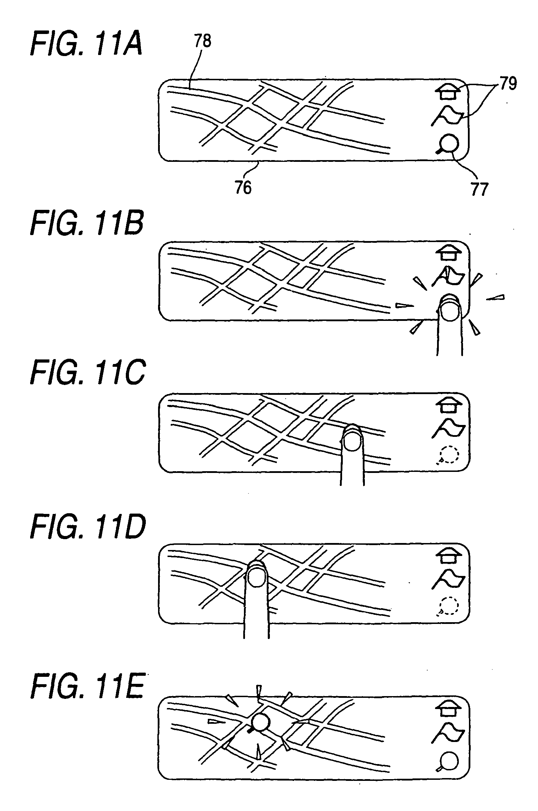

Figs. 11a through 11e are diagrams showing an operating procedure of the case of performing point registration of navigation. Incidentally, an operation of control processing of the main CPU 74 is nearly equal to control processing of the first embodiment shown in Fig. 4, so that a flowchart for the sixth embodiment is omitted.

As shown in Fig. 11a, a symbol 77 (corresponding to a symbol) and a map image 78 are displayed on a screen of the display touch sensor 76. The symbol 77 is an icon showing point registration which is one of navigation processing. In addition to the icon of the symbol 77, a symbol 79 about various navigation processing such as route finding or freeway toll calculation is displayed.

As shown in Fig. 11b, when a user touches an icon of the symbol 77 with a finger 5 for a predetermined time (for example, two or three seconds) or longer as a predetermined instruction operation, the main CPU 74 detects the instruction operation through the touch sensor 76a and the interface circuit 75, and selects the icon of the symbol 77 and a command of point registration corresponding to the icon. In the case, the main CPU 74 blinks the icon of the symbol 77 and notifies the user that the point registration is selected.

Then, as shown in Fig. 11c, when the user drags (moves) in a direction of an arrow of the drawing with the icon of the symbol 77 touched with the finger 5 as a predetermined movement operation, the main CPU 74 moves a display position of the icon in response to the movement operation. In the case, an icon whose contrast is weakened may be displayed in the original display position of the icon.

As shown in Fig. 11d, when the user moves the finger 5 in a touch state to a particular point on the map image 78 and stops the drag, a display position of the icon of the symbol 77 overlaps with a display position of the point. When the main CPU 74 detects a stop of the drag, as shown in Fig. 11e, the main CPU 74 blinks the icon of point registration of the symbol 77 in a selected position of the map image 78 and notifies the user that a point corresponding to the position is set as a registration point. Simultaneously, data of an actual point corresponding to the position of the map image is registered in memory.

Incidentally, in the sixth embodiment described above, the invention has been described as a symbol relating to navigation by taking a symbol of point registration as an example but, for example, when a symbol of route finding is dragged in a position of the purpose of a map image, the route closest to the point can be displayed on the map image without performing a troublesome switch operation. Or, when a symbol of freeway toll calculation is dragged in a position of a tollgate of a map image, a freeway toll to be paid is displayed on the display 76b.

According to the navigation apparatus of the sixth embodiment, an arbitrary symbol displayed is selected in response to a touch of a finger and a display position of the symbol selected is moved in response to a drag operation and a point corresponding to a position on a map image in which the display position of the symbol selected is present is set as a point relating to navigation by a stop of the drag operation, so that a desired position on a displayed map image can be set easily as the point relating to navigation without performing a troublesome switch operation.

According to the electronic equipment of the invention configured as described above, at least one of an arbitrary first symbol or an arbitrary second symbol displayed is selected in response to a predetermined instruction operation and a display position of the selected symbol is moved in response to a predetermined movement operation and the details of the control corresponding to the second symbol are executed with respect to the control object corresponding to the first symbol in the case of detecting that a display position of the first symbol overlaps with a display position of the second symbol by a stop of the movement operation, so that desired details of the control can be executed easily with respect to a desired control object without performing a troublesome switch operation.

Also, according to a navigation apparatus of the invention constructed as described above, an arbitrary symbol displayed is selected in response to a predetermined instruction operation and a display position of the symbol selected is moved in response to a predetermined movement operation and a point corresponding to a position on a map image in which the display position of the symbol selected is present is set as a point relating to navigation by a stop of the movement operation, so that a desired position on a displayed map image can be set easily as the point relating to navigation without performing a troublesome switch operation.

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defihed in the appended claims.

## Claims

1. An electronic equipment (1, 6) comprising:
a display unit (4, 7) configured to display a first symbol (41,43, 44, 46, 49a, 77, 79) indicating a control object and a second symbol (42, 45, 47, 50, 78) indicating details of a control in a predetermined display position, respectively;
a selection unit configured to select at least one of the first and the second (41,43, 44, 46, 49a, 77, 79, 42, 45, 47, 50, 78) symbols displayed on the display unit (4, 7) in response to an instruction operation;
a movement unit configured to move the display position of the selected symbol (41,43, 44, 46, 49a, 77, 79) in response to a movement operation; and
a control unit configured to execute the details of the control corresponding to the second symbol (42, 45, 47, 50, 78) with respect to the control object corresponding to the first symbol (41,43, 44, 46, 49a, 77, 79) in response to an execution operation,
**characterized in that**
the control unit executes the details of the control when the control unit detects that the display position of the first symbol (41,43, 44, 46, 49a, 77, 79) overlaps the display position of the second symbol (42, 45, 47, 50, 78) at a time the movement operation has stopped.

2. The electronic equipment (1, 6) of claim 1, wherein:
the first symbol is a map image (78) and the second symbol is a symbol relating to navigation (77, 79) in a predetermined display position;
the selection unit is configured to select the symbol relating to navigation (77, 79) displayed on the display unit (4, 7) in response to an instruction operation; and
the control unit is configured to configure a point corresponding to a position on the map image as a point relating to navigation, the position being the display position in which the selected symbol (77, 79) is moved to in response to a configuration operation.

3. The electronic equipment (1, 6) as claimed in claim 2, wherein the control unit configures the point corresponding to the position on the map image as the point relating to navigation, when the control unit detects the movement operation of the selected symbol (77, 79) has stopped.

4. The electronic equipment (1, 6) as claimed in claim2 or 3, wherein the symbol relating to navigation (77, 79) is a symbol indicating a registration of the point on the map image (78) as the point relating to navigation.

5. The electronic equipment (1, 6) as claimed in any one of claims 1 to 4 further comprising a touch sensor (4) configured to detect a touch position in response to a touch of a display screen of the display unit.

6. The electronic equipment (1, 6) as claimed in claim 5, wherein the selection unit selects at least one of the first and the second symbols (41,43, 44, 46, 49a, 77, 79, 42, 45, 47, 50, 78) in response to the instruction operation in which the display screen (4) is touched in the display position corresponding to the first or the second symbols to be selected, and
wherein the movement unit moves the display position of the selected symbol in response to the movement operation in which the touch being slid on the display screen.

7. The electronic equipment (1, 6) as claimed in claim 5 or 6, wherein the selection unit selects at least one of the first and the second symbols (41,43, 44, 46, 49a, 77, 79, 42, 45, 47, 50, 78) when the display screen is touched for a predetermined time period or longer in the display position of the symbol to be selected.

8. The electronic equipment (1, 6) as claimed in any one of claims 1 to 4, further comprising a light sensor configured to detect an irradiation position in response to a light beam (9) with which a display screen of the display unit (7) is irradiated.

9. The electronic equipment (1, 6) as claimed in claim 8, wherein the selection unit selects at least one of the first and the second symbols (41,43, 44, 46, 49a, 77, 79, 42, 45, 47, 50, 78) in response to the instruction operation in which the display screen is irradiated with the light beam (9) in the display position corresponding to the first or the second symbols (41,43, 44, 46, 49a, 77, 79, 42, 45, 47, 50, 78) to be selected, and
wherein the movement unit moves the display position of the selected symbol in response to the movement operation in which the light beam (9) being moved on the display screen.

10. The electronic equipment (1, 6) as claimed in claim 8 or 9, wherein the selection unit selects at least one of the first and the second symbols (41, 43, 44, 46, 49a, 77, 79, 42, 45, 47, 50, 78) when the display screen is irradiated with the light beam (9) for a predetermined time period or longer in the display position of the symbol to be selected.

## Patentansprüche

1. Elektronisches Gerät (1, 6), das umfasst:
eine Anzeigeeinheit (4, 7), die so eingerichtet ist, dass sie ein erstes Symbol (41, 43, 44, 46, 49a, 77, 79), das ein Steuer-Objekt angibt, und ein zweites Symbol (42, 45, 47, 50, 78), das Details einer Steuerung angibt, jeweils an einer vorgegebenen Anzeigeposition anzeigt;
eine Auswähleinheit, die so eingerichtet ist, dass sie das erste oder/und das zweite Symbol (41, 43, 44, 46, 49a, 77, 79, 42, 45, 47, 50, 78), die auf der Anzeigeeinheit (4, 7) angezeigt werden, in Reaktion auf einen Anweisungsvorgang auswählt;
eine Verschiebeeinheit, die so eingerichtet ist, dass sie die Anzeigeposition des ausgewählten Symbols (41, 43, 44, 46, 49a, 77, 79) in Reaktion auf einen Verschiebevorgang verschiebt; und
eine Steuereinheit, die so eingerichtet ist, dass sie die Details der Steuerung entsprechend dem zweiten Symbol (42, 45, 47, 50, 78) in Bezug auf das Steuer-Objekt entsprechend dem ersten Symbol (41, 43, 44, 46, 49a, 77, 79) in Reaktion auf einne Ausführungsvorgang ausführt,
**dadurch gekennzeichnet, dass**
die Steuereinheit die Details der Steuerung ausführt, wenn die Steuereinheit erfasst, dass die Anzeigeposition des ersten Symbols (41, 43, 44, 46, 49a, 77, 79) die Anzeigeposition des zweiten Symbols (42, 45, 47, 50, 78) zu einem Zeitpunkt überlappt, zu dem der Verschiebevorgang beendet worden ist.

2. Elektronisches Gerät (1, 6) nach Anspruch 1, wobei:
das erste Symbol ein Karten-Bild (78) ist, und das zweite Symbol ein Symbol (77, 79), das sich auf Navigation bezieht, an einer vorgegebenen Anzeigeposition ist;
die Auswähleinheit so eingerichtet ist, dass sie in Reaktion auf einen Anweisungsvorgang das auf der Anzeigeeinheit (4, 7) angezeigte Symbol (77, 79), das sich auf Navigation bezieht, auswählt; und
die Steuereinheit so eingerichtet ist, dass sie einen Punkt, der einer Position auf dem Karten-Bild entspricht, als einen Punkt konfiguriert, der sich auf Navigation bezieht, wobei die Position die Anzeigeposition ist, an die das ausgewählte Symbol (77, 79) in Reaktion auf einen Konfigurierungsvorgang verschoben wird.

3. Elektronisches Gerät (1, 6) nach Anspruch 2, wobei die Steuereinheit den Punkt, der der Position auf dem Karten-Bild entspricht, als den Punkt konfiguriert, der sich auf Navigation bezieht, wenn die Steuereinheit erfasst, dass der Verschiebevorgang des ausgewählten Symbols (77, 79) beendet worden ist.

4. Elektronisches Gerät (1, 6) nach Anspruch 2 oder 3, wobei das Symbol (77, 79), das sich auf Navigation bezieht, ein Symbol ist, das eine Registrierung des Punktes auf dem Karten-Bild (78) als den Punkt angibt, der sich auf Navigation bezieht.

5. Elektronisches Gerät (1, 6) nach einem der Ansprüche 1 bis 4, das des Weiteren einen Berührungssensor (4) umfasst, der so eingerichtet ist, dass er eine Berührungsposition in Reaktion auf eine Berührung eines Anzeigebildschirms der Anzeigeeinheit erfasst.

6. Elektronisches Gerät (1, 6) nach Anspruch 5, wobei die Auswähleinheit das erste oder/und das zweite Symbol (41, 43, 44, 46, 49a, 77, 79,42, 45, 47, 50, 78) in Reaktion auf den Anweisungsvorgang auswählt, bei dem der Anzeigebildschirm (4) an der Anzeigeposition berührt wird, die dem auszuwählenden ersten oder zweiten Symbol entspricht, und
die Verschiebeeinheit die Anzeigeposition des ausgewählten Symbols in Reaktion auf den Verschiebevorgang verschiebt, bei dem die Berührungsstelle auf dem Anzeigebildschirm verschoben wird.

7. Elektronisches Gerät (1, 6) nach Anspruch 5 oder 6, wobei die Auswähleinheit das erste oder/und das zweite Symbol (41, 43, 44, 46, 49a, 77, 79, 42, 45, 47, 50, 78) auswählt, wenn der Anzeigebildschirm über einen vorgegebenen Zeitraum oder länger an der Anzeigeposition des auszuwählenden Symbols berührt wird.

8. Elektronisches Gerät (1, 6) nach einem der Ansprüche 1 bis 4, das des Weiteren einen Lichtsensor umfasst, der so eingerichtet ist, dass er eine Bestrahlungsposition in Reaktion auf einen Lichtstrahl (9) erfasst, mit dem ein Anzeigebildschirm der Anzeigeeinheit (7) bestrahlt wird.

9. Elektronisches Gerät (1, 6) nach Anspruch 8, wobei die Auswähleinheit das erste oder/und das zweite Symbol (41, 43, 44, 46, 49a, 77, 79, 42, 45, 47, 50, 78) in Reaktion auf den Anweisungsvorgang auswählt, in dem der Anzeigebildschirm mit dem Lichtstrahl (9) an der Anzeigeposition bestrahlt wird, die dem auszuwählenden ersten oder zweiten Symbol (41, 43, 44, 46, 49a, 77, 79, 42, 45, 47, 50, 78) entspricht, und
wobei die Verschiebeeinheit die Anzeigeposition des ausgewählten Symbols in Reaktion auf den Verschiebevorgang verschiebt, bei dem der Lichtstrahl (9) auf dem Anzeigebildschirm verschoben wird.

10. Elektronisches Gerät (1, 6) nach Anspruch 8 oder 9, wobei die Auswähleinheit das erste und/oder zweite Symbol (41, 43, 44, 46, 49a, 77, 79, 42, 45, 47, 50, 78) auswählt, wenn der Anzeigebildschirm mit dem Lichtstrahl (9) über einen vorgegebenen Zeitrahmen oder länger an der Anzeigeposition des auszuwählenden Symbols bestrahlt wird.

## Revendications

1. Appareil électronique (1, 6) comprenant :
une unité d'affichage (4, 7) configurée pour afficher respectivement un premier symbole (41, 43, 44, 46, 49a, 77, 79) indiquant un objet de commande et un deuxième symbole (42, 45, 47, 50, 78) indiquant des détails d'une commande à une position d'affichage prédéterminée ;
une unité de sélection configurée pour sélectionner au moins l'un des premier et deuxième symboles (41, 43, 44, 46, 49a, 77, 79, 42, 45, 47, 50, 78) affichés sur l'unité d'affichage (4, 7) en réponse à une opération d'instruction ;
une unité de déplacement configurée pour déplacer la position d'affichage du symbole sélectionné (41, 43, 44, 46, 49a, 77, 79) en réponse à une opération de déplacement ; et
une unité de commande configurée pour exécuter les détails de la commande correspondant au deuxième symbole (42, 45, 47, 50, 78) en ce qui concerne l'objet de commande correspondant au premier symbole (41, 43, 44, 46, 49a, 77, 79) en réponse à une opération d'exécution,
**caractérisé en ce que**
l'unité de commande exécute les détails de la commande lorsque l'unité de commande détecte que la position d'affichage du premier symbole (41, 43, 44, 46, 49a, 77, 79) chevauche la position d'affichage du deuxième symbole (42, 45, 47, 50, 78) à un moment auquel l'opération de déplacement est arrêtée.

2. Appareil électronique (1, 6) selon la revendication 1, dans lequel :
le premier symbole est une image de carte (78) et le deuxième symbole est un symbole relatif à la navigation (77, 79) à une position d'affichage prédéterminée ;
l'unité de sélection est configurée pour sélectionner le symbole relatif à la navigation (77, 79) affiché sur l'unité d'affichage (4, 7) en réponse à une opération d'instruction ; et
l'unité de commande est configurée pour configurer un point correspondant à une position sur l'image de carte en tant que point relatif à la navigation, la position étant la position d'affichage à laquelle le symbole sélectionné (77, 79) est déplacé en réponse à une opération de configuration.

3. Matériel électronique (1, 6) selon la revendication 2, dans lequel l'unité de commande configure le point correspondant à la position sur l'image de carte en tant que point relatif à la navigation, lorsque l'unité de commande détecte que l'opération de déplacement du symbole sélectionné (77, 79) est arrêtée.

4. Matériel électronique (1, 6) selon la revendication 2 ou 3, dans lequel le symbole relatif à la navigation (77, 79) est un symbole indiquant un enregistrement du point sur l'image de carte (78) en tant que point relatif à la navigation.

5. Matériel électronique (1, 6) selon l'une quelconque des revendications 1 à 4, comprenant en outre un capteur de toucher (4) configuré pour détecter une position de toucher en réponse à un toucher sur un écran d'affichage de l'unité d'affichage.

6. Matériel électronique (1, 6) selon la revendication 5, dans lequel l'unité de sélection sélectionne au moins l'un des premier et deuxième symboles (41, 43, 44, 46, 49a, 77, 79, 42, 45, 47, 50, 78) en réponse à l'opération d'instruction au cours de laquelle l'écran d'affichage (4) est touché à la position d'affichage correspondant au premier symbole ou au deuxième symbole à sélectionner, et
dans lequel l'unité de déplacement déplace la position d'affichage du symbole sélectionné en réponse à l'opération de déplacement au cours de laquelle le toucher glisse sur l'écran d'affichage.

7. Matériel électronique (1, 6) selon la revendication 5 ou 6, dans lequel l'unité de sélection sélectionne au moins l'un des premier et deuxième symboles (41, 43, 44, 46, 49a, 77, 79, 42, 45, 47, 50, 78) lorsque l'écran d'affichage est touché pendant une période de temps prédéterminée ou plus longtemps à la position d'affichage du symbole à sélectionner.

8. Matériel électronique (1, 6) selon l'une quelconque des revendications 1 à 4, comprenant en outre un capteur de lumière configuré pour détecter une position d'irradiation en réponse à un faisceau de lumière (9) irradiant un écran d'affichage de l'unité d'affichage (7).

9. Matériel électronique (1, 6) selon la revendication 8, dans lequel l'unité de sélection sélectionne au moins l'un des premier et deuxième symboles (41, 43, 44, 46, 49a, 77, 79, 42, 45, 47, 50, 78) en réponse à l'opération d'instruction au cours de laquelle l'écran d'affichage est irradié avec le faisceau de lumière (9) à la position d'affichage correspondant au premier ou deuxième symbole (41, 43, 44, 46, 49a, 77, 79, 42, 45, 47, 50, 78) à sélectionner, et
dans lequel l'unité de déplacement déplace la position d'affichage du symbole sélectionné en réponse à l'opération de déplacement au cours de laquelle le faisceau de lumière (9) est déplacé sur l'écran d'affichage.

10. Matériel électronique (1, 6) selon la revendication 8 ou 9, dans lequel l'unité de sélection sélectionne au moins l'un des premier et deuxième symboles (41, 43, 44, 46, 49a, 77, 79, 42, 45, 47, 50, 78) lorsque l'écran d'affichage est irradié avec le faisceau de lumière (9) pendant une période de temps prédéterminée ou plus longtemps à la position d'affichage du symbole à sélectionner.
